# EUROPEAN PATENT APPLICATION

(11) **EP 3 533 328 A1**
(43) Date of publication of application: **04.09.2019**
(21) Application number: 18290019.1
(22) Date of filing: 02.03.2018
(51) Int. Cl.: A01M 23/16, A01M 23/20

(54) **AN ANIMAL CAPTURE SYSTEM**

(71) Applicant: Bayer S.A.S., 69009 Lyon (FR); Leclair, Nicolas, 85610 La Bernardière (FR)
(72) Inventor: The designation of the inventor has not yet been filed
(74) Representative: Bosser, Isabelle

(57) **Abstract**

The present invention relates to an animal capture system (10). It is described to move (210) a door of a cage to an open position. When the door is in an open position an opening of the cage is suitable for the entry into the cage of an animal that is the size of a coypu. When the door is in a closed position, the door blocks the opening of the cage to prevent exit of the animal from the cage. An animal food is contained (220) within the cage. A switch system comprises a door closing mechanism; and wherein the switch system is configured to close the door when the animal has entered the cage. A transmitter is attached (230) to the cage or placed securely in proximity to the cage. A connector is connected (240) to the door. The connector is connected (250) to the transmitter in a releasable manner via first releasable connection means. When the door is in the open position the connector is connected to the transmitter and connected to the door, wherein connection of the connector to the transmitter comprises attachment of the first releasable connection means to the transmitter. When the door moves from the open position to the closed position the connector disconnects from the transmitter, wherein disconnection of the connector from the transmitter comprises detachment of the first releasable connection means from the transmitter. A signal is transmitted (260) by the transmitter to indicate that the cage is occupied when the first releasable connection means detaches from the transmitter.

## Description

### FIELD OF THE INVENTION

The present invention relates to an animal capture system and to a method for capturing an animal.

### BACKGROUND OF THE INVENTION

The general background of this invention is capture of animals, that for example can be invasive alien species. For example, coypus and muskrats and American mink are not native to Europe, with coypus being native to subtropical and temperate South America and muskrats being native to North America. However, coypus, muskrats and mink can be disruptive to the environment in which they live, leading to erosion of riverbanks due to proliferation of burrows and the displacement of native species. These disruptive species can be primary carriers and vectors of disease; for example leptospirosis that is potentially transmissible to humans and that can be fatal, and which is responsible for miscarriages in cows who have consumed water from contaminated ponds, swamps or rivers. These disruptive species can be classified as pests, and climate change leading to warmer winters has led to an increase in numbers, not mitigated by natural predators, leading to an intolerable increase in the damage they cause. These animals therefore need to be controlled. Trapping to capture animals can form one control mechanism, however such control is labour intensive.

### SUMMARY OF THE INVENTION

It would be advantageous to have an improved way of capturing an animal.

The object of the present invention is solved with the subject matter of the independent claims, wherein further embodiments are incorporated in the dependent claims. It should be noted that the following described aspects and examples of the invention apply also for the animal capture system and to the method for capturing an animal.

According to an aspect, there is provided an animal capture system, comprising:
- a cage;
- a door;
- a switch system;
- a transmitter; and
- a connector

The door is moveable with respect to the cage. When the door is in an open position an opening of the cage is suitable for the entry into the cage of an animal to be trapped, preferably of an animal that is the size of a coypu. The size of the opening may range from (30 to 60 cm) wide X (30 to 60 cm) high, e;g. 50 X 50 cm, 30 X 35 cm. When the door is in a closed position, the door is configured to block the opening of the cage to prevent exit of the animal from the cage. The cage is configured to contain an animal food within the cage. The switch system comprises a door closing mechanism. The switch system is configured to close the door when the animal has entered the cage. The transmitter is configured to be attached to the cage and/or placed securely in proximity to the cage. The connector is configured to be connected to the door. The connector is configured to be connected to the transmitter in a releasable manner via first releasable connection means. When the door is in the open position the connector is configured to be connected to the transmitter and connected to the door. Connection of the connector to the transmitter comprises attachment of the first releasable connection means to the transmitter. When the door moves from the open position to the closed position the connector is configured to disconnect from the transmitter. Disconnection of the connector from the transmitter comprises detachment of the first releasable connection means from the transmitter. The transmitter is configured to transmit a signal that the cage is occupied when the first releasable connection means is detached from the transmitter.

In other words, when an animal such as a coypu enters the cage to eat the food, the door of the cage is triggered to close. As the door closes a connector that is connected to the door and connected to a transmitter breaks its connection with the transmitter due to the door closing. Upon breaking of the connection, the transmitter transmits a signal that the animal has been caught. The transmitter can be attached to the cage or securely attached in proximity to the cage, such that the transmitter does not move relative to the cage and in this way the connector does not detach from the transmitter moving, but does so when the door to the cage closes.

Thus, when the first releasable connection means detaches from the transmitter a relay or switch of the transmitter is closed and the transmitter uses an aerial to transmit a signal that the cage is occupied. The aerial can be within the housing of the transmitter or external to the housing of the transmitter. A user can utilize for example an app on their mobile phone, where the mobile phone receives the transmitted signal and the app notifies to the user that the cage is occupied for example through an appropriate message appearing on the screen of the mobile phone, and/or through an alert sound or message being sounding from a speaker of the mobile phone.

In this way, a user can know in an easy and convenient way when traps have been triggered. Obligatory checking of traps, which can be for example daily before noon, can be simplified. Thus, a user will not have to make daily checks of cages, thereby saving time and resource. For example, a user can operate and maintain a greater number of traps (animal capture systems) according to the present invention. Furthermore, survival rates of trapped animals can be increased.

Furthermore, the trap can be easily reset and existing traps can be retrofitted to become an animal capture system as described herein.

In an example, the transmitter is configured not to transmit a signal that the cage is occupied when the first releasable connection means is attached to the transmitter.

Thus, the system only indicates that an animal is caught when the door has closed.

In an example, the connector is configured to be connected to the door in a releasable manner via second releasable connection means.

This facilitates retrofitting existing traps to become animal capture systems, providing for a cost effective way of improving animal capture.

In an example, a first attachment force between the first releasable connection means and the transmitter is less than a second attachment force between the second releasable connection means and the door.

In this way, it can be ensured that triggering of the door to close detaches the connector from the transmitter as the door closes to make the transmitter transmit that the trap has been sprung, and does not lead to the connector detaching from the door and does so with a capability to retrofit existing traps.

In an example, the first releasable connection means is the same as the second releasable connection means.

In other words, the connector is symmetrical having the same connection means at both ends. This makes for a cost effective, easy to manufacture solution, that is also easy to attach to traps because either end of the connector can attach to the transmitter with the other end then attaching to the door. Thus, enhanced usability is provided because when fitting the connector to an existing trap it does not matter what end attaches to the door and what end attaches to the transmitter.

In an example at least a part of the transmitter at a position where the connector is configured to be connected to the transmitter comprises a material to which a magnet is attracted, and wherein the first releasable connection means comprises a magnet.

In this way, a simple means can be used to attach the connector to the transmitter, which could have a housing made of a ferrous material or be nonferrous such as plastic but have a ferrous part (or magnet) in the vicinity or at the location where the first releasable connection means of the connector is to be attached to the transmitter. Also, tensioning of the connector as the door closes can be used to pull the first releasable connection means comprising a magnet from the transmitter in order that the transmitter can begin to transmit a signal that the cage has been sprung - that it is occupied.

In an example, a part of the door at a position where the connector is configured to be connected to the door comprises a material to which a magnet is attracted, and wherein the second releasable connection means comprises a magnet.

In this way, a simple means is provide for attaching the connector to the door of a trap, where that door is made from for example a ferrous material such as iron or steel. Thus, the magnetic connection between the connector and the door can be made stronger that the connection between the connector and the transmitter (that can itself comprise magnetic attachment means), which results in the connector detaching from the transmitter as the door to the cage closes.

In an example, at the position where the connector is configured to be connected to the transmitter, at least a part of an outer surface of a transmitter housing comprises a material to which a magnet is not attracted. The material to which a magnet is not attracted is positioned between the material to which a magnet is attracted and the first releasable connection means when the connector is attached to the transmitter.

In this way, by having a spacer material between the magnet and the part of the transmitter that attracts the magnetic, where the spacer material is not attracted to the magnetic, the attachment force of the magnetic to the transmitter can be reduced. This is because the magnetic is spaced away from the material it is attracted to. The outer surface of the transmitter (the non-ferrous spacer) can be of varying thicknesses to reduce the attachment force of the magnet to the transmitter as required. In this way, a simple means is provided to ensure that the connector is attached to the door with a greater attractive force that the force with which the connector is attached to the transmitter, thereby providing that the magnetic detaches from the transmitter when the door closes. This also enables the connector to have the same magnetic at either end, but still enable the magnetic to detach from-the transmitter and remain attached to the door.

In an example, the material to which a magnet is not attracted is a plastic.

In an example, the connector comprises a substantially non-extendable flexible linkage linking the first releasable connection means to the second releasable connection means.

In other words, a simple means is provided to enable the closing of the door to tense the connector and make it taught, and as the door closes further the connector cannot stretch and this the closing of the door necessarily detaches the first releasable connection means from the transmitter.

In an example, the linkage comprises a piece of string or a piece of wire.

In this way, a very cost effective connector can be provided and used, that can be easily replaced if need be.

In an example, when the door is in the open position the first releasable connection means is configured to be attached to the transmitter at a first attachment position and wherein the second releasable connection means is configured to be attached to the door at a second attachment position. A distance around the outside of the cage from the first attachment position to the second attachment position is equal to or less than a length of the non-extendable flexible linkage. When the door is in the closed position the second attachment position has moved to a third attachment position such that a distance around the outside of the cage from the first attachment position to the third attachment position is greater than a length of the non-extendable flexible linkage.

According to a second aspect, there is provided a method for capturing an animal, comprising:
a) moving a door of a cage to an open position, wherein when the door is in an open position an opening of the cage is suitable for the entry into the cage of an animal to be trapped, preferably of an animal that is the size of a coypu; and wherein, when the door is in a closed position, the door blocks the opening of the cage to prevent exit of the animal from the cage;
b) containing an animal food within the cage; wherein a switch system comprises a door closing mechanism; and wherein the switch system is configured to close the door when the animal has entered the cage;
c) attaching a transmitter to the cage or placing the transmitter securely in proximity to the cage;
d) connecting a connector to the door;
e) connecting the connector to the transmitter in a releasable manner via first releasable connection means; wherein when the door is in the open position the connector is connected to the transmitter and connected to the door, wherein connection of the connector to the transmitter comprises attachment of the first releasable connection means to the transmitter; and wherein when the door moves from the open position to the closed position the connector disconnects from the transmitter, wherein disconnection of the connector from the transmitter comprises detachment of the first releasable connection means from the transmitter; and
f) transmitting a signal by the transmitter to indicate that the cage is occupied when the first releasable connection means detaches from the transmitter.

In an example, step d) comprises connecting the connector to the door in a releasable manner via second releasable connection means.

In an example, a first attachment force between the first releasable connection means and the transmitter is less than a second attachment force between the second releasable connection means and the door.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an animal capture system with an open door;
Fig. 2 shows a schematic set up of an example of an animal capture system with a closed door and
Fig. 3 shows a method for capturing an animal.

### DETAILED DESCRIPTION OF EMBODIMENTS

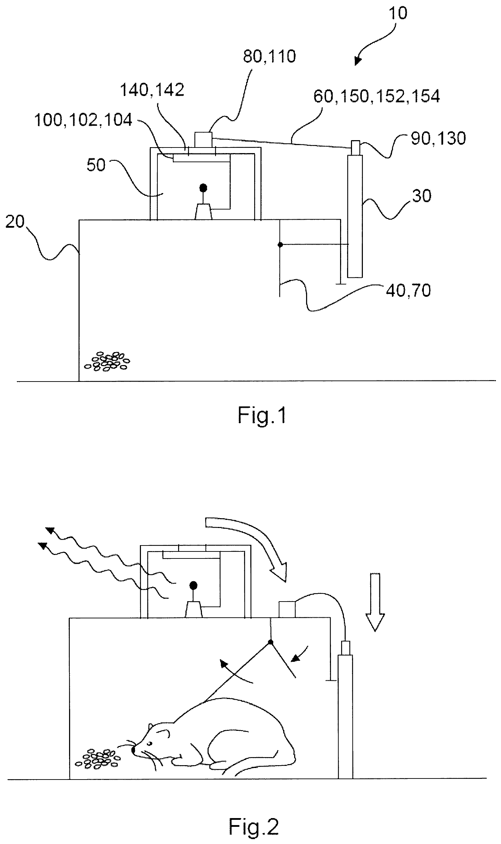

Fig. 1 shows an example of an animal capture system 10. The animal capture system 10 comprises a cage 20, a door 30, a switch system 40, a transmitter 50, and a connector 60. The door 30 is moveable with respect to the cage 20. When the door 30 is in an open position an opening of the cage 20 is suitable for the entry into the cage 20 of an animal that is preferably the size of a coypu. When the door 30 is in a closed position, the door 30 is configured to block the opening to the cage 20 to prevent exit of the animal from the cage 20. The cage 20 is configured to contain an animal food within the cage 20. The switch system 40 comprises a door closing mechanism 70. The switch system 40 is configured to close the door when the animal has entered the cage 20. The transmitter 50 is configured to be attached to the cage 20 and/or placed securely in proximity to the cage 20. The connector 60 is configured to be connected to the door 30. The connector 60 is configured to be connected to the transmitter 50 in a releasable manner via first releasable connection means 80. When the door 30 is in the open position the connector 60 is configured to be connected to the transmitter 50 and connected to the door 30. Connection of the connector 60 to the transmitter 50 comprises attachment of the first releasable connection means 80 to the transmitter 50. When the door 30 moves from the open position to the closed position the connector 60 is configured to disconnect from the transmitter 50. Disconnection of the connector 60 from the transmitter 50 comprises detachment of the first releasable connection means 80 from the transmitter 50. The transmitter 50 is configured to transmit a signal that the cage 20 is occupied when the first releasable connection means 80 is detached from the transmitter 50.

As shown in Fig. 2, an animal has entered the cage and in doing so the door has been triggered to close. As the door closes, the connector that connects the door to the transmitter becomes taut and as the door continues to close the connector cannot become long, and as such the part of the connector that is attached to the transmitter is pulled off and detaches from the transmitter. Detachment of the connector from the transmitter has automatically caused the transmitter to use an aerial to transmit a signal that the cage is occupied by an animal.

In an example, the transmitter is configured periodically to transmit a signal that the animal capture system is functional. In an example, the transmitter is configured daily to transmit a signal that the animal capture system is functional.

In an example, the switch system that triggers the door to close when an animal enters the cage is a standard switch system found on other traps that trigger the door to similarly close when an animal enters the trap.

In an example, the transmitter is configured to transmit a signal that the animal capture system is activated when the first releasable connection means is first connected to the transmitter. Thus, when the first releasable connection means is first attached to the transmitter a relay or switch of the transmitter is activated and the transmitter uses an aerial to transmit a signal that the cage is activated. The relay or switch that is used in indicating that the cage is active can be the same as that used to indicate that the cage is occupied. Thus, the relay or switch can open when the first releasable connection means is attached to the transmitter and this triggers the transmitter to send a signal using an aerial that the cage is active. The transmitter can then not transmit until the first releasable connection means detaches from the transmitter when the first relay or switch opens and the transmitter uses the aerial to send a signal that the cage is occupied. Here clearly open/close can be used in opposite senses. However, a different switch or relay can be used to indicate that the cage is activated to that used to indicate that the cage is occupied. Thus, a user can have a mobile telephone with an app, and the mobile phone can receive the signal and the app notify to the use that the cage is activated, and in this way the use can be sure that the cage is correctly set or primed. The part of the transmitter that is configured to transmit a signal that the cage has been activated can be the same as the part of the transmitter that periodically (i.e., daily) transmits a signal that the cage is functional.

In an example, the transmitter can be battery powered. In some examples, where a power outlet is nearby the transmitter can be mains powered, powered via an appropriate transformer.

In an example, the transmitter is configured to transmit using a non GSM technology such as Sigfox or LoRa technologies.

In an example, the transmitter is configured to transmit using Sigfox technology. In an example, a signal can be transmitted to a Sigfox server in order that a user can receive a message (that the cage is occupied, optionally that the cage is activated, and optionally that the cage remains operational). In an example, the transmitter is configured to transmit using LoRa technology. In an example, a signal can be transmitted to a LoRa server in order that a user can receive a message (that the cage is occupied, optionally that the cage is activated, and optionally that the cage remains operational). Other transmission technologies such as LTE-M or NB-IoT can be utilized that can, for example also provide energy savings.

According to an example, the transmitter is configured not to transmit a signal that the cage is occupied when the first releasable connection means is attached to the transmitter.

According to an example, the connector is configured to be connected to the door in a releasable manner via second releasable connection means 90.

In an example, the first releasable connection means comprises utilization of a breakable glue. In an example, the second releasable connection means comprises utilization of a breakable glue. Thus, the connector can be glued to the transmitter and/or to the door. The glue joint between the connector and transmitter would be designed to break under tension as the door closes and tensions the connector, whilst the connection between the connector and the door would remain intact.

In an example, the first releasable connection means comprises utilization of a breakable tie. In an example, the second releasable connection means comprises utilization of a breakable tie. For example, an elastic band can be used, that will break once stretched past a set distance or a thin plastic clasp that will break when put under tension past a breaking tension. Thus, for example, a weaker elastic band can be used to connect the connector to the transmitter than is used to connect the connector to the door.

In an example, the first releasable connection means comprises utilization of a force openable tie. In an example, the second releasable connection means comprises utilization of a force openable. In other words, a tie can attach the connector but when a force is applied the tie can open and release the connector. For example, a thin metal ring with a cut in the ring will gradually open when under tension and eventually when the tension is too great will open.

In an example, the first releasable connection means comprises utilization of a magnet. In an example, the second releasable connection means comprises utilization of a magnet.

Other first and second releasable connection means are possible.

According to an example, a first attachment force between the first releasable connection means and the transmitter is less than a second attachment force between the second releasable connection means and the door.

For example, a glue or breakable tie or openable tie or magnet used to connect the connector to the transmitter will detach from the transmitter whilst a glue or breakable tie or openable tie or magnet maintains it attachment to the door.

According to an example, the first releasable connection means is the same as the second releasable connection means.

According to an example, at least a part of the transmitter at a position where the connector is configured to be connected to the transmitter comprises a material to which a magnet is attracted 100, and wherein the first releasable connection means 80 comprises a magnet 110.

In an example the material to which a magnet is attracted is a ferrous material.

In an example, the material to which a magnet is attracted is a magnet 102. In an example, the material to which a magnet is attracted is a metal material 104.

In an example, a magnetic induction detection unit is mounted within the transmitter and is configured to detect when the first releasable connection means detaches from the transmitter. This then leads to a relay or switch of the transmitter to be closed and the transmitter to start transmitting a signal that the cage is occupied.

In an example, the magnetic induction detection unit mounted within the transmitter is configured to detect when the first releasable connection means is first attached to the transmitter. Thus, for example the relay or switch can be opened when the first releasable connection means is connected to the transmitter and the transmitter sends a signal that the cage is activated.

In an example, a second magnetic induction detection unit is mounted within the transmitter configured to detect when the first releasable connection means is first attached to the transmitter. This then enables a switch or relay to be activated and thereby the transmitter can transmit via its aerial that the cage is activated.

According to an example, a part of the door at a position where the connector is configured to be connected to the door comprises a material to which a magnet is attracted 120, and wherein the second releasable connection means 90 comprises a magnet 130.

According to an example, at the position where the connector is configured to be connected to the transmitter, at least a part of an outer surface of a transmitter housing 140 comprises a material to which a magnet is not attracted 142. The material to which a magnet is not attracted is positioned between the material to which a magnet is attracted and the first releasable connection means when the connector is attached to the transmitter.

In an example the material to which a magnet is not attracted is a non-ferrous material.

In an example, the transmitter housing 140 can be made of plastic, or at least a part of the housing made of plastic, and material 100, such as a magnet 102 or metal material 104 such as iron or steel is positioned inside the housing at the position where the magnetic connector is to be attached.

According to an example, the material to which a magnet is not attracted is a plastic.

According to an example, the connector comprises a substantially non-extendable flexible linkage 150 linking the first releasable connection means to the second releasable connection means.

According to an example, the linkage comprises a piece of string 152 or a piece of wire 154.

According to an example, when the door is in the open position the first releasable connection means is configured to be attached to the transmitter at a first attachment position and the second releasable connection means is configured to be attached to the door at a second attachment position. In this open configuration a distance around the outside of the cage from the first attachment position to the second attachment position is equal to or less than a length of the non-extendable flexible linkage. When the door is in the closed position the second attachment position has moved to a third attachment position such that a distance around the outside of the cage from the first attachment position to the third attachment position is greater than a length of the non-extendable flexible linkage. Thus, closing of the door pulls the first releasable connection means from the transmitter to activate the transmitter to transmit a signal that the cage is occupied.

In an example, the animal food comprises a dehydrated food. In an example, the animal food comprises carrot. In an example, the animal food comprises parsnip. In an example, the animal food comprises a mixture of dehydrated carrot and dehydrated parsnip. In an example, the animal food comprises a mixture of 50% carrot and 50% parsnip. In this way, the food will last longer before perishing or deteriorating, reducing the frequency of re-visits to the trap. Such dehydrated foods can in certain situations last for 8 to 10 days, thereby enabling a cage to be primed and left for a long duration before having to be checked when a signal has indicated that the cage is occupied, or after a prolonged period when the food needs to be refreshed.

In an example, a first dimension of the animal food is bigger than a dimension of a mesh of the cage. In this way, a food such as dehydrated or dried vegetables does not fall through the gaps in the cage, but stays in place and does not fall under the cage. In an example, a second dimension of the animal food orthogonal to the first dimension is bigger that the dimension of the mesh of the cage. In an example, a third dimension of the animal food orthogonal to the first dimension and orthogonal to the second dimension is bigger than the dimension of the mesh of the cage.

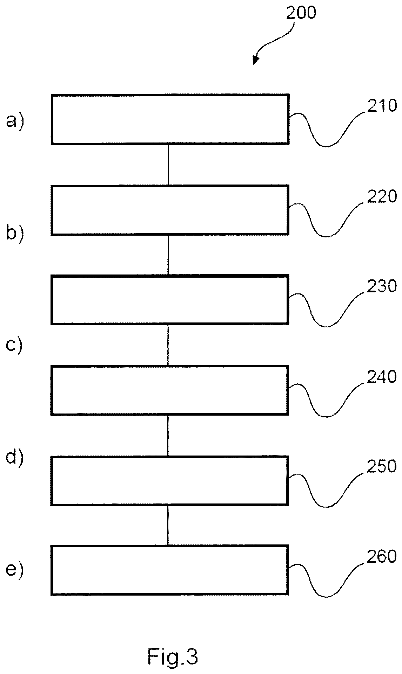

Fig. 3 shows a method 200 for capturing an animal in its basic steps. The method 200 comprises:
in a moving step 210, also referred to as step a), moving a door of a cage to an open position, wherein when the door is in an open position an opening of the cage is suitable for the entry into the cage of an animal that is preferably the size of a coypu; and wherein, when the door is in a closed position, the door blocks the opening to the cage to prevent exit of the animal from the cage;
in a containing step 220, also referred to as step b), containing an animal food within the cage; wherein a switch system comprises a door closing mechanism; and wherein the switch system is configured to close the door when the animal has entered the cage;
in an attaching or positioning step 230, also referred to as step c), attaching a transmitter to the cage or positioning the transmitter securely in proximity to the cage;
in a connecting step 240, also referred to as step d), connecting a connector to the door;
in a connecting step 250, also referred to as step e), connecting the connector to the transmitter in a releasable manner via first releasable connection means; wherein when the door is in the open position the connector is connected to the transmitter and connected to the door, wherein connection of the connector to the transmitter comprises attachment of the first releasable connection means to the transmitter; and wherein when the door moves from the open position to the closed position the connector disconnects from the transmitter, wherein disconnection of the connector from the transmitter comprises detachment of the first releasable connection means from the transmitter; and
in a transmitting step 260, also referred to as step f), transmitting a signal by the transmitter to indicate that the cage is occupied when the first releasable connection means detaches from the transmitter.

In an example, the method comprises not transmitting a signal by the transmitter that the cage is occupied when the first releasable connection means is attached to the transmitter

According to an example, step d) comprises connecting the connector to the door in a releasable manner via second releasable connection means.

According to an example of the method, a first attachment force between the first releasable connection means and the transmitter is less than a second attachment force between the second releasable connection means and the door.

In an example, the first releasable connection means is the same as the second releasable connection means.

In an example, step e) comprises connecting the connector at a position of a part of the transmitter that comprises a material to which a magnet is attracted and wherein the first releasable connection means comprises a magnet.

In an example, step d) comprises connecting the connector at a position of the door where a part of the door comprises a material to which a magnet is attracted, and wherein the second releasable connection means comprises a magnet.

In an example, at the position where the connector is connected to the transmitter, an outer surface of the housing comprises a material to which a magnet is not attracted.

In an example, the material to which a magnet is not attracted is a plastic.

In an example, the connector comprises a substantially non-extendable flexible linkage linking the first releasable connection means to the second releasable connection means.

In an example, the linkage comprises a piece of string or a piece of wire.

In an example, when the door is in the open position the first releasable connection means is attached to the transmitter at a first attachment position and the second releasable connection means is attached to the door at a second attachment position and a distance around the outside of the cage from the first attachment position to the second attachment position is equal to or less than a length of the non-extendable flexible linkage, and when the door is in the closed position the second attachment position has moved to a third attachment position such that a distance around the outside of the cage from the first attachment position to the third attachment position is greater than a length of the non-extendable flexible linkage and consequently the first releasable connection means detaches from the transmitter.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An animal capture system (10), comprising:
- a cage (20);
- a door (30);
- a switch system (40);
- a transmitter (50); and
- a connector (60);
wherein, the door is moveable with respect to the cage;
wherein, when the door is in an open position an opening of the cage is suitable for the entry into the cage of an animal that is preferably the size of a coypu;
wherein, when the door is in a closed position, the door is configured to block the opening to the cage to prevent exit of the animal from the cage;
wherein, the cage is configured to contain an animal food within the cage; wherein, the switch system comprises a door closing mechanism (70); wherein, the switch system is configured to close the door when the animal has entered the cage;
wherein, the transmitter is configured to be attached to the cage;
wherein, the connector is configured to be connected to the door;
wherein, the connector is configured to be connected to the transmitter in a releasable manner via first releasable connection means (80);
wherein, when the door is in the open position the connector is configured to be connected to the transmitter and connected to the door, wherein connection of the connector to the transmitter comprises attachment of the first releasable connection means to the transmitter;
wherein, when the door moves from the open position to the closed position the connector is configured to disconnect from the transmitter, wherein disconnection of the connector from the transmitter comprises detachment of the first releasable connection means from the transmitter; and
wherein, the transmitter is configured to transmit a signal that the cage is occupied when the first releasable connection means is detached from the transmitter.

2. Animal capture system according to claim 1, wherein the transmitter is configured not to transmit a signal that the cage is occupied when the first releasable connection means is attached to the transmitter.

3. Animal capture system according to any of claims 1-2, wherein the connector is configured to be connected to the door in a releasable manner via second releasable connection means (90).

4. Animal capture system according to claim 3, wherein a first attachment force between the first releasable connection means and the transmitter is less than a second attachment force between the second releasable connection means and the door.

5. Animal capture system according to any of claims 3-4, wherein the first releasable connection means is the same as the second releasable connection means.

6. Animal capture system according to any of claims 1-5, wherein at least a part of the transmitter at a position where the connector is configured to be connected to the transmitter comprises a material to which a magnet is attracted (100), and wherein the first releasable connection means (80) comprises a magnet (110).

7. Animal capture system according to any of claims 3-6, wherein a part of the door at a position where the connector is configured to be connected to the door comprises a material to which a magnet is attracted (120), and wherein the second releasable connection means (90) comprises a magnet (130).

8. Animal capture system according to any of claims 6-7, wherein at the position where the connector is configured to be connected to the transmitter, at least a part of an outer surface of a transmitter housing (140) comprises a material to which a magnet is not attracted (142) and wherein the material to which a magnet is not attracted is positioned between the material to which a magnet is attracted and the first releasable connection means when the connector is attached to the transmitter.

9. Animal capture system according to claim 8, wherein the material to which a magnet is not attracted is a plastic.

10. Animal capture system according to any of claims 3-9, wherein the connector comprises a substantially non-extendable flexible linkage (150) linking the first releasable connection means to the second releasable connection means.

11. Animal capture system according to claim 10, wherein the linkage comprises a piece of string (152) or a piece of wire (154).

12. Animal capture system according to any of claims 10-11, wherein when the door is in the open position the first releasable connection means is configured to be attached to the transmitter at a first attachment position and wherein the second releasable connection means is configured to be attached to the door at a second attachment position and wherein a distance around the outside of the cage from the first attachment position to the second attachment position is equal to or less than a length of the non-extendable flexible linkage, and wherein when the door is in the closed position the second attachment position has moved to a third attachment position such that a distance around the outside of the cage from the first attachment position to the third attachment position is greater than a length of the non-extendable flexible linkage.

13. A method (200) for capturing an animal, comprising:
a) moving (210) a door of a cage to an open position, wherein when the door is in an open position an opening of the cage is suitable for the entry into the cage of an animal that is preferably the size of a coypu; and wherein, when the door is in a closed position, the door blocks the opening to the cage to prevent exit of the animal from the cage;
b) containing (220) an animal food within the cage; wherein the switch system comprises a door closing mechanism; and wherein a switch system is configured to close the door when the animal has entered the cage;
c) attaching (230) a transmitter to the cage or placing the transmitter securely in proximity to the cage;
d) connecting (240) a connector to the door;
e) connecting (250) the connector to the transmitter in a releasable manner via first releasable connection means; wherein when the door is in the open position the connector is connected to the transmitter and connected to the door, wherein connection of the connector to the transmitter comprises attachment of the first releasable connection means to the transmitter; and wherein when the door moves from the open position to the closed position the connector disconnects from the transmitter, wherein disconnection of the connector from the transmitter comprises detachment of the first releasable connection means from the transmitter; and
f) transmitting (260) a signal by the transmitter to indicate that the cage is occupied when the first releasable connection means detaches from the transmitter.

14. Method according to claim 13, wherein step d) comprises connecting the connector to the door in a releasable manner via second releasable connection means.

15. Method according to any of claims 13-14, wherein a first attachment force between the first releasable connection means and the transmitter is less than a second attachment force between the second releasable connection means and the door.
